Europäisches Patentamt

European Patent Office

Office européen des brevets

(11) Publication number : **0 646 632 A1**

(12) **EUROPEAN PATENT APPLICATION**

(21) Application number : **94306499.8**

(22) Date of filing : **02.09.94**

(51) Int. Cl.⁶ : **C09J 163/10,** G02F 1/1339

(30) Priority : **02.09.93 IE 9306/43**

(43) Date of publication of application :
**05.04.95 Bulletin 95/14**

(84) Designated Contracting States :
**DE FR GB**

(71) Applicant : **LOCTITE (IRELAND) LIMITED**
**Tallaght Business Park,**
**Whitestown,**
**Tallaght**
**Dublin 24 (IE)**

(72) Inventor : **Dooley, John Martin**
**16 Kincora Court**
**Clontarf, Dublin 3 (IE)**
Inventor : **Ward, Bernadette**
**75 Cherrywood Avenue**
**Clondalkin, Dublin 22 (IE)**

(74) Representative : **Marchant, James Ian et al**
**Elkington and Fife**
**Prospect House**
**8 Pembroke Road**
**Sevenoaks, Kent TN13 1XR (GB)**

(54) **A method of manufacturing a liquid crystal display and a composition for use in the method.**

(57)   Use of a dual functionality, dual curing adhesive composition comprising a half-acrylated diepoxy resin having a bisphenol A backbone as a side sealant in the manufacture of a liquid crystal display. The composition contains an epoxy latent hardener. The adhesive is initially cured by UV light and then further cured by heat.

EP 0 646 632 A1

The present invention relates to a method of manufacturing a liquid crystal display using a dual functionality, dual curing adhesive composition. The invention further relates to the use of a dual functionality, dual curing adhesive composition in the manufacture of liquid crystal displays.

The operation of a liquid crystal display (LCD) relies on the electro-optical effect of a liquid crystal material which is housed between two sheets of glass, each of which has a polarising filter whose planes of polarisation are displaced from each other. The optical characteristics of the liquid crystal are controlled by an electric field which is applied via electrodes housed within the display. Adhesive compositions have several applications in LCD assembly. Firstly, an adhesive material is used to bond the front and rear glass sheets together and acts as a gasket or side sealant confining the liquid crystal material within the display. A small gap is left in the gasket or side seal through which the liquid crystal material is filled once the display is assembled. This charge port is sealed after the introduction of the liquid crystal by a small amount of adhesive.

Adhesive material is also used to bond the electrode terminals to the display.

At present, it is usual to use a heat curable side sealant which can require cure cycles of up to 1 to 5 hours at approximately 150 to 180°C, while holding the display mechanically in absolute alignment.

JP-A-58 105 124 (Patent Abstracts of Japan, Vol 7, No 210 (P-233)(1355)) describes the production of a liquid crystal display panel using a sealing resin mixture which combines thermosetting adhesive agents, such as epoxy adhesive agents, and UV adhesive curing agents. After application of the mixture to substrates at a controlled spacing, UV curing is carried out first, the quality condition is then checked, and heat curing is carried out subsequently. However the present applicants have found in tests that such a mixture of resins is unsatisfactory because uncured epoxy resin migrates to the surface during or after the UV curing stage, resulting in a wet surface which leads to a risk of contamination and also to an unsatisfactory final cure if hardener has not migrated with the epoxy resin.

U.S. Patent No. 3,753,755 assigned to Minnesota Mining and Manufacturing Company discloses a composition comprising a thermo-settable resin system containg both acrylic-type unsaturation and epoxy groups, an elastomeric copolymer, and an acrylic/epoxy dual curing system, the composition providing temporary adhesion between two bodies at ordinary temperatures and which may be subsequently heat-hardened to form a strong permanent bond. U.S. Patent No. 3,873,638 also assigned to Minnesota Mining and Manufacturing Company discloses a sheet material coated with a composition according to their above mentioned U.S. Patent No. 3,753,755. Two distinct heat curing stages are used with these compositions.

U.S. Patent No. 3,450,613 assigned to Bausch & Lomb Incorporated describes an optical cement for use in the manufacture of compound optical elements such as microscope objectives. The cement comprises the reaction product of an epoxy resin prepolymer containing at least two epoxy groups with an alpha-beta-ethylenically unsaturated carboxylic acid (e.g. acrylic or methacrylic acid) together with a photosensitizer. Exposure to light sufficiently rigidifies the cement to permit routine manipulations of the optical assemblies without displacing the relative positions of the various elements. A final polymerization may be obtained by a heat treatment to provide a hard durable bond. However this patent, published in 1969, contains no teaching about the manufacture of liquid crystal displays. A side sealant for liquid crystal display production must meet a number of exacting criteria. The function of the side sealant is to bond together the glass substrates (with alignment coatings and electrodes thereon) at a precisely determined gap (5-10 micrometres) and to confine the liquid crystal in the space defined by the glass substrates and the side sealant. The second sealant therefore plays an important role as a major constituent of the liquid crystal display. The liquid crystal acts as a highly aggressive solvent. Therefore a highly cross linked solvent-resistant polymer is required.

The sealant must also be suitable for application to the glass substrates (e.g. by screen printing or automatically-guided dispensing) to define the liquid crystal area (which is normally rectangular) and in a thickness range of 5-10 micrometres. Adhesion of the sealant to electrode materials (e.g. indium tin oxide) and to the alignment coatings (e.g. polymide) on glass substrates must be high. Depending on the final use of the display the sealant material might have to withstand temperatures varying from -40°C to +85°C with or without high relative humidity. Problems in sealant reliability can be manifested in: distortion of liquid crystal orientation; appearance of image blur; reduced image contrast; occurrence of bubbles within the liquid crystal display; peeling of substrates; or an increase in electrical current consumption.

A liquid crystal display functions at low power consumption levels so that the presence of any extraneous current carrying materials will have a deleterious effect on the operation of the display. Control of ionic species in the sealant is important.

A sealant material for liquid crystal display manufacture should also combine a good pot life at room temperature with a reasonably fast final cure at moderate temperatures. It should be a one-part composition which can be held during a printing or dispensing run without significant changes in viscosity of the sealant material. U.S. Patent 3,450,613 describes the use of a dicarboxylic acid anhydride such as methyl succinic ahydride as a hardener for the epoxy resin. However such a hardener is usually used in a 2-part composition because it has significant activity at room temperature. As described in Examples 2 and 5 of U.S. Patent 3,450,613, shelf life was measured at 25°F(-5°C). Final cure also required a high temperature of 125°C and a substantial time of 2 hours. In Example 3 a tertiary amine (dimethylbenzylamine) was used to catalyze the final cure. However the cure at 60°C required the unacceptably long time of 16 hours.

Chemical Abstract No. CA115(12):116352 relates to various acrylate oligomers, for example acrylated epoxies, and their curing using an electron beam. In particular, oligomers sold under the Trade name of "EBECRYL" are referred to. Chemical Abstract No. CA115(4):031175 relates to the hybrid cure of "half-acrylates" by radiation.

It is an object of the present invention to provide a method of manufacturing liquid crystal displays which does not involve holding the display mechanically in absolute alignment for long periods of time at high temperatures. It is also an object of the invention to provide a manufacturing method which is suitable for automation.

The present invention provides a method of manufacturing a liquid crystal display comprising the steps of:

(a) applying a sealant composition to a first substrate in a pattern to define a side seal for confining liquid crystal but with a charge port therein, wherein said sealant composition is a dual functionality, dual curing adhesive composition comprising:

(i) a resin having a bisphenol A backbone with a functional end group curable by ultraviolet light and a functional end group curable by heat on the same backbone;

(ii) a UV curing agent; and

(iii) a latent hardener;

(b) bringing a second substrate into contact with the adhesive but with a gap between the two substrates so that the two substrates and the side seal define a housing for the liquid crystal;

(c) subjecting the adhesive to an initial cure by irradiation with ultraviolet light; and

(d) subsequently subjecting the adhesive to a heat curing step.

In completing the manufacture of a liquid crystal display, liquid crystal is introduced through the charge port, and the charge port is then sealed.

Preferably the adhesive composition comprises a half-acrylated diepoxy resin i.e. reaction product of a diepoxy resin having a bisphenol A backbone with acrylic or methacrylic acid in a molar ratio of approximately 1 mole of acid to each mole of diepoxy resin.

Preferably, the adhesive composition comprises from 40 to 80%, more preferably 50 to 70%, by weight of half-acrylated diepoxy resin.

In addition, the adhesive composition preferably further comprises at least one modifying resin in an amount of from 5 to 30, more preferably 10 to 25, and most preferably 15 to 20%, by weight of the total adhesive composition. The modifying resin is preferably an acrylic resin or an epoxy resin. A mixture of such resins may also be used.

The composition additionally comprises ingredients for a UV cure and for a heat cure of the composition. The UV curing agent should be present in an effective amount e.g. 0.5 to 5% by weight of the total composition. The ingredients for a heat cure of the composition include a latent hardener which is heat-activatable. Such a hardener should be substantially inactive at room temperature but be capable of activation at temperatures above 50°C to effect the heat cure of the epoxy resin. For use in liquid crystal display manufacture, the preferred type of latent hardener is one which can provide a stable composition at 5°C and can provide cure in relatively short periods at elevated temperature e.g. 5-30 minutes at temperatures between 80 and 150°C. Suitable hardeners are described in British Patent 1,121,196 (Ciba Geigy AG), European Patent Application 138465A (Ajinomoto Co) or European Patent Application 193068A (Asahi Chemical) - the contents of all of which are incorporated herein by reference-or in commercial literature e.g. Anchor Chemical 2014. A preferred type of latent hardener is a reaction product of phthalic anhydride and an aliphatic polyamine, more particularly a reaction product of approximately equimolar proportions of phthalic acid and diethylamine triamine as described in British Patent 1,121,196. A hardener of this type is sold by Ciba Geigy AG under the Trade Mark CIBA HT 9506.

Another type of preferred hardener is a reaction product of (i) a polyfunctional epoxy compound, (ii) an imidazole compound and (iii) phthalic anhydride. The polyfunctional epoxy compound may be any compound having two or more epoxy groups in the molecule as described in U.S. Patent No. 4,546,155 the contents of which are incorporated by reference. More preferably the imidazole compound is 2-ethyl-4-methylimidazole.

Examples of these hardeners are disclosed in U.S. Patent No. 4,546155 especially in Table 1 at column 6 thereof, where sample 13 in particular is an adduct of Epon 828 (bisphenol type epoxy resin epoxy equivalent 184-194, a product of Shell Chemical Co.), 2-ethyl-4-methylimidazole and phthalic anhydride. A hardener of this type is commercially available from Ajinomoto Co. Inc. under the Trade Mark AJICURE PN-23.

Reference is directed to U.S. Patent 5,077,376 which describes a latent hardener combination, the contents of which are also incorporated herein by reference.

The latent hardener may suitably be present in an amount of from 5 to 45 parts, preferably from 5 to 30 parts more preferably from 10 to 20 parts by weight per 100 parts of resin. Other ingredients are conventional and are used in amounts known to those skilled in the art.

The diepoxy resin has a bisphenol A backbone in order to provide the necessary resistance to attack by the liquid crystal. It is preferably of electronic grade with a low hydrolysable chloride content. Epoxy resin compositions are known in the art and are described, for example, in British Patent 1,121,196 or U.S. Patent 4,546,155.

In the description which follows, the two substrates are described as "glass sheets". However it will be understood by those skilled in the art of liquid crystal display manufacture that the glass sheets will normally carry an electrode pattern (e.g. of indium tin oxide) and an alignment coating (e.g. of a polyimide-based material). Therefore the adhesive composition of the invention will normally bond to polyimide-coated glass and/or to indium tin oxide/polyimide coated glass.

The use of a dual functionality, dual curing adhesive in the method of the present invention provides temporary adhesion between the first and second glass sheets after the initial UV curing step. A strong permanent bond may be formed subsequently by subjecting the adhesive to a heat curing step. The present inventors recognised that since an LCD comprises an adhesive layer sandwiched together between two transparent glass sheets, a UV curing adhesive may be used. However, generally speaking, UV curable acrylic type materials do not have sufficient chemical resistance to liquid crystal materials. Therefore a resistant material such as an epoxy type network is required.

The use of a dual functionality, dual curing resin in the manufacture of liquid crystal displays is advantageous because of the possibility of replacing long heat curing stages which may require cure cycles of the order of 1 to 5 hours at approximately 150 to 180°C, in the case of epoxy sealants, while holding the display mechanically in absolute alignment, with adhesives which require fixture times in the order of seconds to provide a temporary adhesion between the first and second glass sheets which would be sufficient to allow the display to be handled, the adhesive being subsequently subjected to a heat curing process to form a permanent bond at some later stage.

While developing a dual functionality, dual curing system for use in LCD manufacture, the inventors of the present invention tested a mixed resin system comprising a UV curable acrylic resin and a separate heat curable epoxy resin, thus providing dual functionality in the combined mixture. By using such a mixture it was hoped to achieve the advantages of having a UV curable function in the adhesive composition which could be cured using UV light once the adhesive was sandwiched between the glass sheets, and then at some subsequent stage to complete the curing process by subjecting the epoxy resin to a heat curing step. However, this mixed resin system was found to be unsuitable for LCD manufacture because a wet surface of uncured epoxy resin was present after the UV curing stage.

The preferred method of the present invention using a dual functionality, dual curing adhesive which comprises a resin having an acrylic functional group and an uncapped epoxy functional group on the same bisphenol A backbone has been found to overcome the technical difficulties in existing methods of LCD manufacture. A modifying resin such as an acrylic or epoxy resin is typically added to the adhesive composition as a diluent to control the viscosity of the composition as desired.

In the first step in the method according to the invention a pattern of dual functionality, dual curing adhesive is applied to a first glass sheet . Screen printing or guided dispensing may be used to facilitate the high production volumes required. Polyester or stainless steel screens may be suitably employed to ensure pattern accuracy. Particle size control in the adhesive is important in the screen printing process and additives such as micronised alumina may be incorporated in the adhesive composition as a viscosity modifier, whereas these are not necessary if guided dispensing is used. Gap spacers are used to ensure a uniform gap across the whole display.

Next a second glass sheet is brought in contact with the dual functionality, dual curing adhesive layer. Adhesion of the adhesive layer to the glass must be high, but the depth of cure requirement for the adhesive may be low. Use of a dual functionality, dual curing adhesive composition provides that the adhesive may be cured in two stages which is advantageous to its use in LCD manufacture.

The method of manufacture of the present invention is characterised in that the dual functionality, dual curing adhesive composition is initially cured by irradiation with UV light to provide a temporary bond between the first and second glass sheets, and that the adhesive is subsequently subjected to a heat curing process to form a permanent bond. The transparent nature of the two glass sheets of which the display is comprised facilitates the use of a UV curable adhesive to bond the two sheets together. Once the UV cure has been completed, the bond between the two glass sheets is sufficient to allow the display to be handled. Thus, the steps of applying the adhesive to the first glass sheet; contacting the second glass sheet with the adhesive layer and curing the adhesive before handling, can all be integrated into an automated assembly line. The subsequent heat curing of the epoxy function in the dual functionality resin provides a strong permanent bond between the two glass sheets.

A small gap is left in the LCD side sealant through which the liquid crystal is filled once the display is assembled and the side seal has been cured. This is the charge port. The liquid crystal material is charged into the display, normally using a vacuum filling operation. Excess liquid crystal is then removed by wiping and a small amount of UV curable adhesive is used to cover the charge port. The LCD is then cooled to approximately 1°C, which causes the liquid crystal to contract and the adhesive to be pulled into the charge port, which is sealed upon UV curing. The contact area between the plugging adhesive and the liquid crystal is very small.

The dual functionality, dual curing composition and its use in LCD manufacture will now be further described with reference to the following Examples.

**EXAMPLE 1**

A dual cure composition comprising a mixture of a heat-curable diepoxy resin with a UV curable diacrylated diepoxy resin (composition 1) was compared with a dual functionality, dual cure composition (composition 2) as used in the invention.

| Component | Composition 1 (Comparative) | Composition 2 (Invention) |
|---|---|---|
| EBECRYL 3605 | --- | 55.81 |
| QUATREX 1010 | 27.91 | --- |
| SYNOCURE 3104 | 27.91 | --- |
| DER 736 | 20.00 | 20.00 |
| CIBA HT 9506 | 30.09 | 30.09 |
| UCC SILANE A187 | 2.00 | 2.00 |
| IRGACURE 184 | 1.3 | 1.3 |

[all amounts are in parts by weight]

| | |
|---|---|
| EBECRYL 3605 | - half acrylated bisphenol A diepoxy (molecular wt. 450 - and Brookfield viscosity 500-800 mPas (65$^0$C)), from - U.C.B., B-1620 Drogenbos, Belgium |
| QUATREX 1010 | - bisphenol A diepoxy, from Dow Chemical Co. |
| SYNOCURE 3104 | - diacrylated bisphenol A diepoxy, from Dow Chemical Co. |
| DER 736 | - polyglycol diepoxy, from Dow Chemical Co. |
| CIBA HT 9506 | - epoxy latent hardener, from Ciba Geigy |
| UCC SILANE A187 | - glycidoxypropyl trimethoxysilane, from Union Carbide |
| IRGACURE 184 | - 1-benzoyl cyclohexanol (UV curative), from Ciba Geigy |

The above compositions were found to have the following properties:
1. Bond strength between grit blasted steel pin and glass (MPa) :
   (a) after 30 seconds exposure to UV light at 100 mW/sq.cm;

| Composition 1 | Composition 2 |
|---|---|
| 1.6 ± 0.9 | 2.4 ± 0.5 |
| (wet fillet) | (dry fillet) |

(b) as for (a) plus heating at 150°C for 30 minutes. Then tested at:

|  | Composition 1 | Composition 2 |
|---|---|---|
| Room temp. | 18.8 ± 3.3 | 22.7 ± 4.7 |
| 60°C | 13.7 ± 2.2 | 23.4 ± 5.6 |
| 80°C | 10.4 ± 0.6 | 11.7 ± 1.7 |

2. Depth of cure after exposure to UV light for 30 seconds at 100 mW/sq.cm:

| Composition 1 | Composition 2 |
|---|---|
| 0.71 mm | 0.78 mm |

3. Glass transition temperature :

| Composition 1 | Composition 2 |
|---|---|
| 60 and 90°C | 90°C |

4. Tack free time:

After exposure to UV light at 100 mW/sq.cm, for 5 seconds, composition 2 has a tack-free surface whereas composition 1 has a partially tack-free but still wet surface.

This data shows that with the dual functionality, dual curing system of the invention a stronger gelled system is formed after initial UV irradiation. UV curing alone of the mixed resin system may not be sufficient to allow handling of the display before heat curing. With the dual functionality, dual curing system a better degree of crosslinking in a single polymer network is achieved while the mixed resin system produces a dual polymer network. This is evident from the two glass transition points observed for the mixed resin system (composition 1) while composition 2 has only one glass transition point. In addition, a wet film of uncured epoxy is observed in the mixed resin system after UV curing of the acrylic resin. This would be disadvantageous in an LCD assembly process.

**EXAMPLE 2**

An LCD was assembled according to the method of the present invention as described above using the composition 3 outlined below as the side sealant.

Composition 3

| | |
|---|---|
| EBECRYL 3605 | 55.81 |
| EBECRYL 53 | 20.00 |
| CIBA HT 9506 | 8.50 |
| UCC SILANE A187 | 2.00 |
| 1-BENZOYL CYCLOHEXANOL | 2.00 |
| BYK A520 | 0.25 |
| BYK S715 | 0.50 |
| AEROSIL 200 | 3.00 |
| MICRONISED ALUMINA | 10.00 |

EBECRYL 53 - acrylated trifunctional oligomer based on a glycerol derivative - molecular wt. 480 and Brookfield viscosity 90 mPas (25°C) - from UCB, B-1620 Drogenbos, Belgium
BYK A 520/BYK S715 - air release and flow additives from Byk Chemie, Germany.

It was then tested by ageing the display while electrically powered and measuring the increase in current consumption or associated reduction in the change of voltage retention. A heat curable epoxy resin system was used to manufacture a second LCD which was used as a comparison in the tests. (All results are expressed in % voltage retention.)

1. Thermal shock: the LCDs were subjected to a heat cycle of from -20°C to +70°C.

|  | Initial | | After 50 cycles | |
|---|---|---|---|---|
|  | Room Temp. | 70°C | Room Temp. | 70°C |
| COMPOSITION 3 | 99.3 | 97.0 | 98.8 | 96.7 |
| COMPARATIVE | 99.3 | 98.0 | 99.0 | 97.7 |

2. Heat ageing: carried out at 80°C.

|  | Initial | | After 250 Cycles | |
|---|---|---|---|---|
|  | Room Temp. | 70°C | Room Temp. | 70°C |
| COMPOSITION 3 | 99.3 | 97.0 | 98.8 | 96.7 |
| COMPARATIVE | 99.3 | 98.0 | 99.0 | 97.7 |

From these results it may be seen that the UV dual functionality, dual curing system of the invention performed as well as the heat curable epoxy system. Thus the advantages in production throughput, mentioned above, such as reduced assembly time, greater efficiency and easier handling, may be achieved without any significant loss of performance.

The following performance tests were carried out on composition 3 at time of manufacture and also after 8 months storage at 5°C.

| | Initial | After 8 Months at 5°C |
|---|---|---|
| **Test** | | |
| Tack free cure at 100 mW/sq cm | <3 | |
| UV CTV 100 mW/sq 30 secs | 0.8mm | |
| Tensile shear strength Grit blasted pin/glass N/sq mm | | |
| 30 secs at 100mW/sq cm | 4.6 | 5.1 |
| UV + 30 mins 150°C | 26.2 | |
| UV + 60 mins 120°C | | 20 |

No gelation of the material has occurred after storage for 8 months at 5°C and the ability to UV cure and heat cure has not been affected.

**EXAMPLE 3**

Further compositions 4 and 5 in accordance with the invention were prepared using a mono acrylated bisphenol-A epoxy resin which has a low hydrolysable chloride content and two different latent hardeners.

| Formulation | 4 | 5 |
|---|---|---|
| Mono acrylated bis phenol-A-epoxy resin | 63.8 | 63.8 |
| Dihydrodicyclopentadienyl oxyethyl methacrylate | 5.8 | 5.8 |
| Irgacure 184 | 2.3 | 2.3 |
| UCC Silane A 187 | 2.3 | 2.3 |
| Byk A520 | 0.3 | 0.3 |
| Byk S 715 | 0.58 | 0.58 |
| Aerosil 200 | 3.47 | 3.47 |
| Micronised Alumina | 11.6 | 11.6 |
| Ciba Geigy HT | 9.85 | 0 |
| Ajicure PN 23 | 0 | 9.85 |

Ajicure PN 23 is supplied by Ajinomoto Co (Japan) and is a latent hardener for epoxy resins.

After 15 weeks storage at 5°C, no gelation had occurred in these compositions which had undergone only marginal changes in viscosity, and they had retained their initial performance characteristics.

Bond strength Grit blasted mild steel pin/glass N/sq mm

| Cure condition | 4 | 5 |
|---|---|---|
| 30 Secs UV at 100 mW/sq cm | 3.1 | 4.8 |
| UV cure + 10 mins at 120°C | 16.24 | 8.46 |
| UV cure + 20 mins at 120°C | 16.47 | 13.26 |
| UV cure + 30 mins at 120°C | 19.03 | 16.8 |
| UV cure + 10 mins at 150°C | 22.84 | 16.77 |
| UV cure + 20 mins at 150°C | 22.23 | 15.27 |
| UV cure + 30 mins at 150°C | 19.55 | 16.78 |

**Claims**

1. A method of manufacturing a liquid crystal display comprising the steps of
   a) applying a sealant composition to a first substrate in a pattern to define a side seal for confining liquid crystal but with a charge port therein, wherein said sealant composition is a dual functionality, dual curing adhesive composition comprising;
   (i) a resin having a bisphenol A backbone with a functional end group curable by ultraviolet light and a functional end group curable by heat on the same backbone;
   (ii) a UV curing agent; and
   (iii) a latent hardener;
   b) bringing a second substrate into contact with the adhesive but with a gap between the two substrates so that the two substrates and the side seal define a housing for the liquid crystal;
   c) subjecting the adhesive to an initial cure by irradiation with ultraviolet light; and
   d) subsequently subjecting the adhesive to a heat curing step.

2. A method according to Claim 1 wherein the resin is a half-acrylated diepoxy resin.

3. A method according to Claim 2 wherein the adhesive comprises the half-acrylated diepoxy resin in an amount of from 40 to 80% by weight of the total adhesive composition.

4. A method according to claim 3 wherein the adhesive comprises the half-acrylated diepoxy resin in an amount of from 50 to 70% by weight of the total adhesive composition.

5. A method according to Claim 1 wherein the adhesive composition further comprises at least one modifying resin selected from acrylic resins and epoxy resins in an amount of from 5 to 30% by weight of the total adhesive composition.

6. A method according to claim 5 wherein the modifying resin is present in an amount of from 10 to 25% by weight of the total composition.

7. A method according to claim 6 wherein the modifying resin is present in an amount of from 15 to 20% by weight of the total adhesive composition.

8. A method according to claim 1 wherein the latent hardener is present in a range of 5-45 parts per 100 parts of resin.

9. Use of a dual functionality, dual curing adhesive composition comprising
    (i) a resin having a bisphenol A backbone with a functional end group curable by ultraviolet light and a functional end group curable by heat on the same backbone;
    (ii) a UV curing agent; and
    (iii) a latent hardener;
    in the manufacture of a liquid crystal display.

10. A sealant composition for use as a side sealant in the manufacture of a liquid crystal display comprising a half-acrylated diepoxy resin having a bisphenol A backbone, a UV curing agent and an epoxy latent hardener.

**European Patent Office**

## EUROPEAN SEARCH REPORT

Application Number

EP 94 30 6499

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D<br>Y | US-A-3 450 613 (ISRAEL V. STEINBERG)<br>* column 2, line 54 - column 3, line 20;<br>examples 2,8 * | 10<br>1,2,8,9 | C09J163/10<br>G02F1/1339 |
| Y,D | PATENT ABSTRACTS OF JAPAN<br>vol. 7, no. 210 (P-223) (1355) 16<br>September 1983<br>& JP-A-58 105 124 (MATSUSHITA DENKI<br>SANGYO)<br>* abstract * | 1,2,8,9 | |
| | | | TECHNICAL FIELDS SEARCHED (Int.Cl.6)<br><br>C09J<br>G02F |

The present search report has been drawn up for all claims

| Place of search | Date of completion of the search | Examiner |
|---|---|---|
| THE HAGUE | 26 January 1995 | Girard, Y |